# EUROPEAN PATENT APPLICATION

(11) **EP 2 860 967 A1**
(43) Date of publication of application: **15.04.2015**
(21) Application number: 13887019.1
(22) Date of filing: 21.10.2013
(51) Int. Cl.: H04N 5/74

(54) **PROJECTOR DEVICE AND METHOD FOR REALIZING PROJECTOR DEVICE WITH NETWORK FUNCTION**

(30) Priority: 19.06.2013 CN 201310243168
(71) Applicant: ZTE Corporation, Shenzhen, Guangdong 518057 (CN)
(72) Inventor: YANG, Qian, Shenzhen Guangdong 518057 (CN); NIU, Jingtao, Shenzhen Guangdong 518057 (CN); MAO, Jianhua, Shenzhen Guangdong 518057 (CN)
(74) Representative: Gevers Patents
(86) International application number: PCT/CN2013/085610
(87) International publication number: WO 2014/201787

(57) **Abstract**

Disclosed are a projector apparatus and a method for implementing a projector apparatus having network functionality. The projector apparatus includes: a network communication module, connected to a projector Central Processing Unit (CPU) module, configured to provide the projector apparatus with network access functionality, and transmit/receive and process network data services under the control of the projector CPU module; the projector CPU module configured to, according to operation instructions of a user, control the network communication module and control the projector apparatus to project on a screen network data downloaded by the user acquired from the network communication module; and a human-computer interaction display, connected to the projector CPU module, configured to provide a human-computer interface for the user to operate the network data services, display for the user content of currently-running network data services and transmit the operation instructions of the user to the projector CPU module. By means of technical solutions according to the present disclosure, the projector apparatus is enabled to have functionality of both a projector and a wireless hotspot.

## Description

### TECHNICAL FIELD

The present disclosure relates to the field of mobile communications, and in particular to a projector apparatus and a method for implementing a projector apparatus having network functionality.

### BACKGROUD

Projectors available in current markets are increasingly adaptive to many occasions with respect to their outlines and volumes by tending to be miniaturization and microminiaturization, and colors of their appearances become diversified; one most important function of these projectors is to magnify images desired to be projected onto a screen, and these projectors are generally used in highly-populated environments such as a meeting room, a cinema, a multimedia classroom and the like. However, essentially, their functionality is still limited to be a tool for projecting images and files, which has limited prospect in development directions including high definition and 3D.

As an portable product for owners of a portable computer to surf the Internet out of home or on business travel, wireless hotspot devices gain more and more popularity among white-collar workers, with relatively low charging standards of operators, more and more users prefer a wireless network over a traditional wired network, thus there is a great increase in demand for mobile hotspot devices including data cards and wireless hotspot, but other functions can't be added due to the limitation from a limited main board space.

### SUMMARY

In view of the above problems, the present disclosure is proposed to provide a projector apparatus, capable of overcoming or at least partially solving the above problems, and a method for implementing a projector apparatus having network functionality.

The present disclosure provides a projector apparatus, and the projector apparatus includes: a network communication module, connected to a projector Central Processing Unit (CPU) module, configured to provide the projector apparatus with network access functionality and transmit/receive and process network data services under the control of the projector CPU module; the projector CPU module configured to, according to operation instructions of a user, control the network communication module and control the projector apparatus to project on a screen network data downloaded by the user acquired from the network communication module; and a human-computer interaction display, connected to the projector CPU module, configured to provide a human-computer interface for the user to operate the network data services, display for the user content of currently-running network data services and transmit the operation instructions of the user to the projector CPU module.

Preferably, the network communication module may further include: a power management circuit configured to supply electricity to network communication module; a communication circuit configured to provide the network communication module with network communication functionality; a transmission/reception circuit, connected to the communication circuit, configured to transmit/receive and process the network data services; and a baseband processing circuit configured to, under the control of the projector CPU module, control individual circuits of the network communication module.

Preferably, the power management circuit may be further configured to: acquire direct current desired by the network communication module from a Universal Serial Bus (USB) interface of the projector apparatus so as to supply electricity to the network communication module; or acquire direct current desired by the network communication module directly from a AC/DC power supply module of the projector apparatus through a DC step-down circuit in the projector apparatus so as to supply electricity to the network communication module.

Preferably, the network communication module may further include an indicator circuit configured to indicate running status of the network communication module.

Preferably, a network access approach of the network communication module may include wireless network access and wired network access.

Preferably, the human-computer interaction display may be further configured to provide an interface for an input device for the user to operate the network data services.

The present disclosure further provides a method for implementing a projector apparatus having network functionality, and the method includes: a network communication module of the projector apparatus provides a user with network data services; a human-computer interaction display of the projector apparatus displays for the user content of currently-running network data services, acquires operation instructions of the user and transmits the operation instructions to a projector CPU module of the projector apparatus; the projector CPU module controls the network communication module to transmit/receive and process the network data services, according to the operation instructions of the user, and acquires network data downloaded by the user from the network communication module; the projector CPU module controls the projector apparatus to project the network data on a screen.

Preferably, the above method may further include: an indicator circuit in the projector apparatus indicates running status of the network communication module.

Preferably, a network access approach of the network communication module may include wireless network access and wired network access.

Preferably, the acquiring by the human-computer interaction display operation instructions of the user may further include: the operation instructions of the user are acquired through an interface of an input device provided by the human-computer interaction display.

Beneficial effects of the present disclosure are as follows.

Technical solutions according to embodiments of the present disclosure forms a projector apparatus having wireless hotspot functionality by using common characteristics of an existing projector apparatus and an existing wireless hotspot device that both of them are arranged in a fixed position and are not desired to be moved during usage and a feature that the existing projector apparatus has a relatively large volume, thus the projector apparatus according to embodiments of the present disclosure has functionality of both a projector and a wireless hotspot so that a user may implement human-computer interaction through a display so as to facilitate the user to implement data downloading, uploading and playing directly using the projector, thereby reducing inconvenience for the user caused by using both of them while utilizing efficiently the space.

The above description is only a summary of technical solutions of the present disclosure, and specific embodiments of the present disclosure will be exemplified below so as to make technical means of the present disclosure more clear so that they can be implemented in accordance with content of the specification and so as to make above and other objectives, features and advantages better understood.

### BRIEF DESCRIPTION OF THE DRAWINGS

Various other advantages and benefits will become clear for those skilled in the art on reading detailed description of preferred embodiments below. Accompanying drawings are only intended to illustrate the preferred embodiments instead of being regarded as a limitation of the present disclosure. Furthermore, like reference numerals refer to like components throughout the accompanying drawings, in which
Fig. 1 is a schematic structural diagram of a projector apparatus according to an embodiment of the present disclosure;
Fig. 2 is a schematic principle diagram of a traditional projector apparatus in prior art;
Fig. 3 is a schematic principle diagram of a projector apparatus according to an embodiment of the present disclosure;
Fig. 4 is a schematic diagram of power supplying according to an embodiment of the present disclosure; and
Fig. 5 is a flow chart of a method for implementing a projector apparatus having network functionality according to an embodiment of the present disclosure.

### DETAILED DESCRIPTION

Exemplary embodiments of the present disclosure will be further elaborated below with reference to accompanying drawings. Though the drawings show exemplary embodiments of the present disclosure, it should be appreciated that the present disclosure may be implemented in various forms instead of being limited by embodiments illustrated herein. On the contrary, the provision of there embodiments is intended to make the present disclosure thoroughly understood and to deliver a complete present disclosure to those skilled in the art.

The present disclosure provides a projector apparatus and a method for implementing a projector apparatus having network functionality, and the technical solutions according to embodiments of the present disclosure may download conveniently and directly information from the Internet onto a screen thereof and play it thereon without a computer, thereby bringing merchants with more opportunities while bringing users with conveniences. Both products can be combined elaborately while advantages of both products are achieved, and the projector apparatus according to embodiments of the present disclosure has a human-computer interaction interface enabling information on the Internet to be directly downloaded onto a screen thereof and played thereon, thereby improving user experiences and expanding application fields of a projector product.

The present disclosure will be further elaborated below in combination with accompanying drawings and embodiments. It should be understood that the specific embodiments are only used to interpret the present disclosure instead of limiting the present disclosure.

### Embodiments of the apparatus

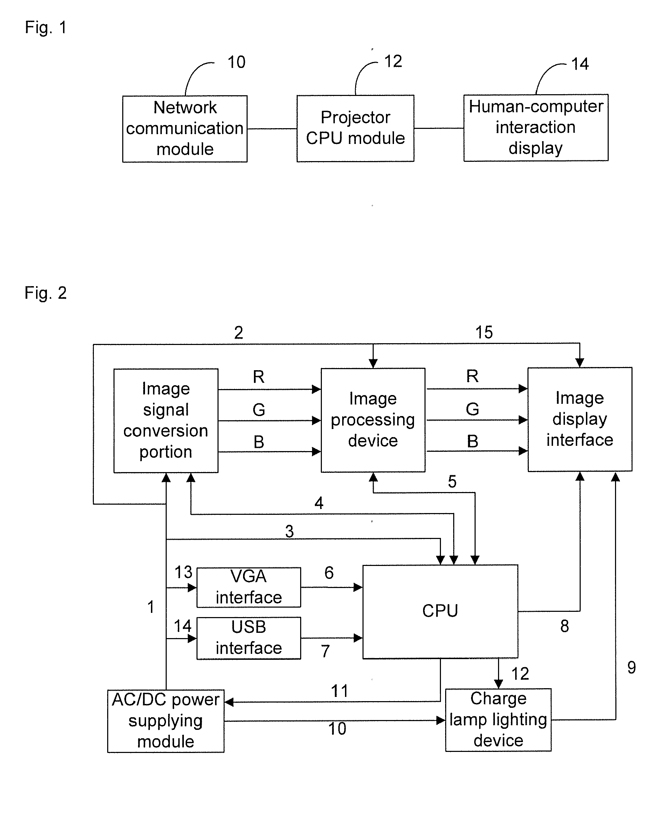

An embodiment of the present disclosure provide a projector apparatus, Fig. 1 is a schematic structural diagram of the projector apparatus according to the embodiment of the present disclosure, as shown in Fig. 1, the projector apparatus according to the embodiment of the present disclosure includes a network communication module 10, a projector Central Processing Unit (CPU) module 12 and a human-computer interaction display 14, and respective modules according to the embodiment of the present disclosure will be elaborated as follows.

The network communication module 10, connected to a projector CPU module, is configured to provide the projector apparatus with network access functionality and transmit/receive and process network data services under the control of the projector CPU module 12; preferably, a network access approach of the network communication module may include wireless network access and wired network access.

The network communication module 10 may further include:
a power management circuit configured to supply electricity to network communication module 10;
in an embodiment, the power management circuit may be further configured to: acquire direct current desired by the network communication module 10 from a Universal Serial Bus (USB) interface of the projector apparatus so as to supply electricity to the network communication module 10; or acquire direct current desired by the network communication module 10 directly from a AC/DC power supply module of the projector apparatus through a DC step-down circuit in the projector apparatus so as to supply electricity to the network communication module 10.
a communication circuit configured to provide the network communication module 10 with network communication functionality; as to a wireless network access approach, the network communication module 10 may include a Wi-Fi module configured to perform wireless network communications;
a transmission/reception circuit, connected to the communication circuit, configured to transmit/receive and process the network data services; and
a baseband processing circuit configured to, under the control of the projector CPU module 12, control individual circuits of the network communication module 10.

The network communication module 10 may further include an indicator circuit configured to indicate running status of the network communication module 10.

The projector CPU module 12 is configured to control the network communication module 10 according to operation instructions of a user, and control the projector apparatus to project on a screen network data downloaded by the user acquired from the network communication module 10.

The human-computer interaction display 14, connected to the projector CPU module 12, is configured to provide a human-computer interface for the user to operate the network data services, display for the user content of currently-running network data services and transmit the operation instructions of the user to the projector CPU module 12.

The human-computer interaction display 14 is further configured to provide an interface for an input device for the user to operate the network data services.

The above technical solutions according to embodiments of the present disclosure will be elaborated below with reference to the accompanying drawings.

All existing projectors includes multiple modules: an AC/DC power supply conversion module configured to convert household AC electricity to DC electricity for use in modules of the projector; a CPU module, as a core part of the projector, configured to process signals inputted by a USB interface, a VGA interface and the like and perform data calculation and display control; a discharge lamp lighting device configured to control lighting of the projector, process level conversion and provide a lamp of the projector with a matching level; an image signal transformation unit configured to convert RGB signals; an image processing device configured to process converted RGB signals into signals that can be displayed by the projector; and an image display interface configured to receive signals desired to be displayed under the control of the CPU module. In addition, the projector further includes a VGA interface, a USB interface and the like, through which other external devices transmit signals into the projector and display the signals onto a screen by virtue of the projector.

Besides functions of a common projector, the projector apparatus having wireless hotspot functionality according to the embodiment of the present disclosure further is added with a common wireless hotspot circuit module (the aforementioned network communication module) and a display for human-computer interaction (the aforementioned human-computer interaction display) by virtue of a power supplying level of DC converted from AC within the projector. The common wireless hotspot circuit module further includes: a baseband processing circuit, as a core processor and controller of the whole wireless hotspot circuit, adapted to control a power management circuit, an RF transmission/reception circuit and other peripheral circuits such as a Wi-Fi circuit; the power management circuit adapted to provide electricity to the whole wireless hotspot device; the RF transmission/reception circuit (the aforementioned transmission/reception circuit) adapted to transmit/receive data and process data services; other peripheral circuits such as a Wi-Fi circuit, including the Wi-Fi circuit (the aforementioned communication circuit), adapted to provide wireless data service; an indicator circuit adapted to running status of the wireless hotspot device; a human-computer interaction display through which human-computer interaction can be performed by using functional buttons arranged on the projector or using a mouse and the like as an operation tool so as to directly download data, images and the like from the Internet and project them on a screen.

The wireless hotspot circuit module may be made as an individual PCB and may also be integrated into a main board of the projector (it should be noted that a circuit board where the aforementioned projector CPU is located is referred to as the main board of the projector). Signal transmission between the wireless hotspot circuit module and the main board of the projector includes DC power supplying levels, data transmission signals and ground connections, a certain connection approach is used to interconnect signals between the wireless hotspot circuit module and the main board of the projector, and there are various connection approaches such connections through conducting wires, through an FPC, through a board-to-board connector, or making the wireless hotspot circuit module and the main board of the projector on a same PCB with signals therebetween communicate through connections on the PCB; if the the wireless hotspot circuit module and the main board of the projector are two separate PCBs, the outline of the the wireless hotspot circuit module may exhibit any shapes as required.

A mechanical connection may be used between the wireless hotspot circuit module and the main board of the projector, a cable connection may also be used, and other connection approaches may further be used, for example, the wireless hotspot circuit module may connect with the main board of the projector through a wire rotating shaft, thus achieving rotatable folding of the wireless hotspot circuit module; they may be connected through a USB interface for ease of usage; they may be connected through an FPC, thus saving internal space of the projector.

Assembling and connecting approaches of a housing of the projector apparatus according to an embodiment of the present disclosure and main board assemblies within the housing may be or may not be the same as those of an existing projector.

By appearance, the projector apparatus according to an embodiment of the present disclosure includes five portions: the wireless hotspot circuit module, the main board of the projector, an interconnection portion between the wireless hotspot circuit module and the main board of the projector, a display and a human-computer interaction portion. The projector apparatus according to the embodiment of the present disclosure can provide wireless high rate data services in a wider coverage in a scenario where the projector is used, provide a human-computer interaction interface for user operations, and upload and download images and videos through the built-in wireless hotspot module, thus improving greatly user experiences.

The projector apparatus according to an embodiment of the present disclosure will be described below with reference to the accompanying drawings.

Fig. 2 is a schematic principle diagram of a traditional projector apparatus in prior art, as shown in Fig. 2, functional modules of the traditional projector apparatus are respective chip-based or board-level functional units; communications between these modules may be performed through interfaces between a terminal and a host device, such as SPI, I2C and the like.

As shown in Fig. 2, a CPU module is a core portion of the whole projector, and a peripheral circuit portion includes an image signal conversion portion, an image processing device, an image display interface, a discharge lamp lighting device, a VGA interface and a USB interface. Respective units on the printed circuit board are powered using an integrated AC/DC power supplying module;
1, 2, 3, 10, 13, 14, 15 in Fig. 2 represent power supplying by the AC/DC power supplying module to respective modules; 4 represents data communications between the image signal conversion portion and the CPU portion and control signals of the CPU over the image signal conversion portion; 5 represents data interaction between the image processing device and the CPU portion and control signals of the CPU over the image processing device; 6 represents data transmission between the VGA interface and the the CPU portion; 7 represents data transmission between the USB interface and the CPU portion; 8 represents control signal of the CPU over the image display interface; 9 represents control signals and levels provided by the charge lamp lighting device to the image display interface; 11 represents level control signals of the CPU over the AC/DC power supplying module after powering up; and 12 represents control signals of the CPU over the charge lamp lighting device.

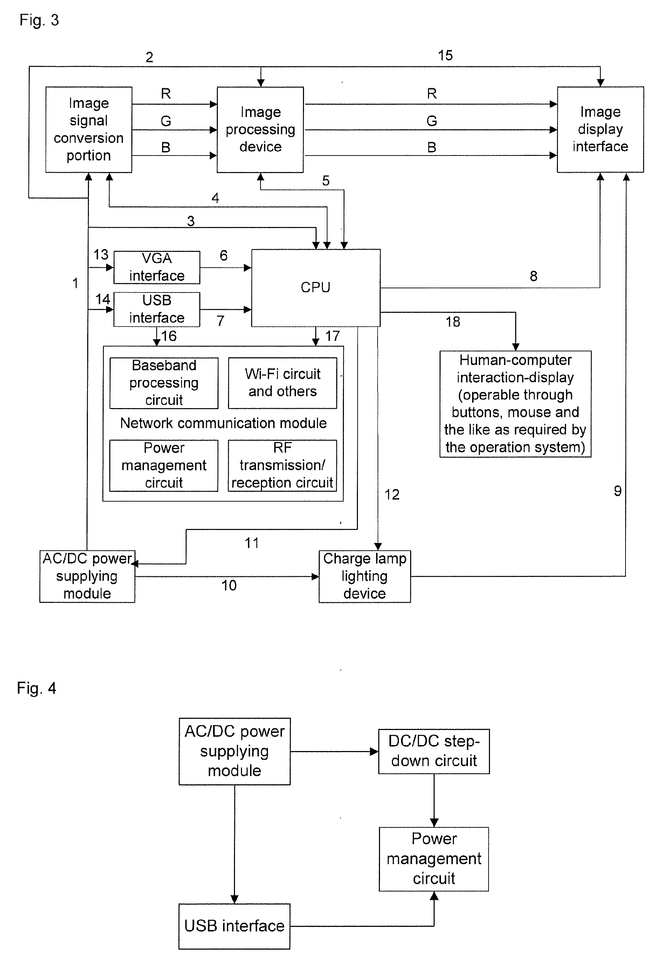

Fig. 3 is a schematic principle diagram of a projector apparatus according to an embodiment of the present disclosure, the greatest difference compared with Fig. 2 lies in that a wireless hotspot device module and a display for human-computer interaction are added.

Connection approaches between the wireless hotspot device module, the display for human-computer interaction of the projector module and the projector module are not limited to those shown in the figures, and all approaches used for combining the wireless hotspot device module, the projector module and the human-machine interaction display into a new device by virtue of various interfaces fall in the scope of protection of the present disclosure.

The wireless hotspot device in Fig. 3 includes a baseband processing circuit module, a power management circuit module, an RF transmission/reception circuit, a Wi-Fi circuit and other modules. The human-computer interaction display in Fig. 3 may be displays of any type, the connection between the display and the main board of the projector may be an FPC, a conducting wire or any other connection approach, and any approach through which the display is connected with the main board falls into the scope of protection of the present disclosure. The human-computer interaction may be implemented by using buttons, a mouse and the like, it may also be implemented in other approaches as required by an operation system of the projector, and any approach through which the human-computer interaction is implemented falls into the scope of protection of the present disclosure.

In Fig. 13, 16 represents levels supplied by the USB interface to the wireless hotspot device module; 17 represents control signals of the CPU over the wireless hotspot device; and 18 represents control signals of the CPU on the main board of the projector over the display and related control and transmission signals for human-computer interaction.

Fig. 4 is a schematic diagram of power supplying according to an embodiment of the present disclosure, as shown in Fig. 4, a power management module of the wireless hotspot device may obtain power from a USB interface supplied by the AC/DC power supplying module, and may also decrease a DC voltage of the projector portion into a DC desired by the wireless hotspot module through an individual DC/DC step-down circuit so as to supply the whole wireless hotspot device.

To sum up, by virtue of the technical solutions according to embodiments of the present disclosure, more functions are added to an original projector, thereby improving user experiences and widening the way for a projector to interact with other terminal products; troubles made by using two separate products are reduced, thereby saving space and improving user experiences; in addition, the newly-added human-computer interaction interface facilitates user's operations so that data and images can be directly uploaded therefrom, downloaded thereto and played thereon, thus improving user experiences.

### Embodiments of the method

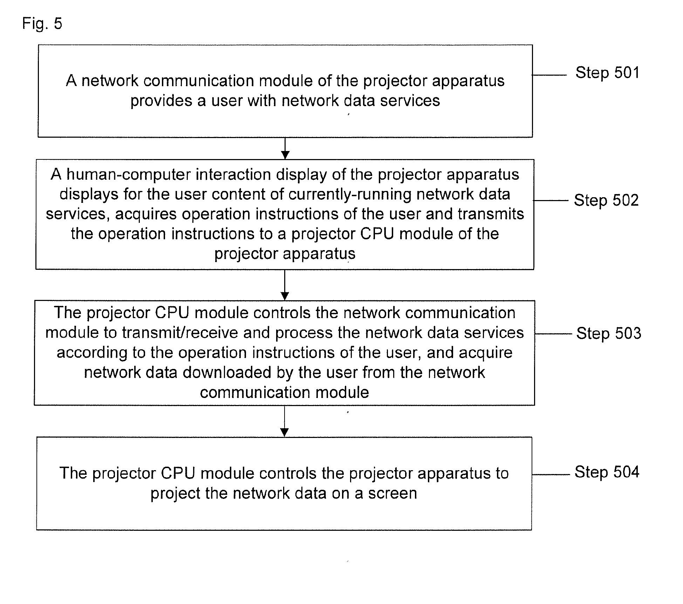

Based on the projector apparatus according to the above embodiments, an embodiment of the present disclosure provides a method for implementing a projector apparatus having network functionality, Fig. 5 is a flow chart of a method for implementing a projector apparatus having network functionality according to an embodiment of the present disclosure, as shown in Fig. 5, the method for implementing a projector apparatus having network functionality according to the embodiment of the present disclosure includes the following steps.

Step 501, a network communication module of the projector apparatus provides a user with network data services; a network access approach of the network communication module includes wireless network access and wired network access.

Step 502, a human-computer interaction display of the projector apparatus displays for the user content of currently-running network data services, acquires operation instructions of the user and transmits the operation instructions to a projector CPU module of the projector apparatus.

In an embodiment, the acquiring by the human-computer interaction display operation instructions of the user may further include: the operation instructions of the user are acquired through an interface of an input device provided by the human-computer interaction display.

Step 503, the projector CPU module controls the network communication module to transmit/receive and process the network data services according to the operation instructions of the user, and acquire network data downloaded by the user from the network communication module.

Step 504, the projector CPU module controls the projector apparatus to project the network data on a screen.

Preferably, in the embodiment of the present disclosure, an indicator circuit in the projector apparatus indicates running status of the network communication module.

To sum up, by virtue of the technical solutions according to embodiments of the present disclosure, more functions are added to an original projector, thereby improving user experiences and widening the way for a projector to interact with other terminal products; troubles made by using two separate products are reduced, thereby saving space and improving user experiences; in addition, the newly-added human-computer interaction interface facilitates user's operations so that data and images can be directly uploaded therefrom, downloaded thereto and played thereon, thus improving user experiences.

It is obvious that various changes and variations can be made by those skilled in the art without departing from the scope of the present disclosure. In this way, if these modifications and variations fall within the scope of the claims and equivalent techniques, the present disclosure is intended to include these changes and variations.

### INDUSTRIAL APPLICABILITY

Technical solutions according to embodiments of the present disclosure forms a projector apparatus having wireless hotspot functionality by using common characteristics of an existing projector apparatus and an existing wireless hotspot device that both of them are arranged in a fixed position and are not desired to be moved during usage and a feature that the existing projector apparatus has a relatively large volume, thus the projector apparatus according to embodiments of the present disclosure has functionality of both a projector and a wireless hotspot so that a user may implement human-computer interaction through a display so as to facilitate the user to implement data downloading, uploading and playing directly using the projector, thereby reducing inconvenience for the user caused by using both of them while utilizing efficiently the space.

## Claims

1. A projector apparatus, comprising:
a network communication module, connected to a projector Central Processing Unit (CPU) module, configured to provide the projector apparatus with network access functionality, and transmit/receive and process network data services under the control of the projector CPU module;
the projector CPU module configured to, according to operation instructions of a user, control the network communication module and control the projector apparatus to project on a screen network data downloaded by the user acquired from the network communication module; and
a human-computer interaction display, connected to the projector CPU module, configured to provide a human-computer interface for the user to operate the network data services, display for the user content of currently-running network data services and transmit the operation instructions of the user to the projector CPU module.

2. The apparatus according to claim 1, wherein the network communication module further comprises:
a power management circuit configured to supply electricity to the network communication module;
a communication circuit configured to provide the network communication module with network communication functionality;
a transmission/reception circuit, connected to the communication circuit, configured to transmit/receive and process the network data services; and
a baseband processing circuit configured to, under the control of the projector CPU module, control individual circuits of the network communication module.

3. The apparatus according to claim 2, wherein the power management circuit is further configured to:
acquire direct current desired by the network communication module from a Universal Serial Bus (USB) interface of the projector apparatus so as to supply electricity to the network communication module; or
acquire direct current desired by the network communication module directly from a AC/DC power supply module of the projector apparatus through a DC step-down circuit in the projector apparatus so as to supply electricity to the network communication module.

4. The apparatus according to claim 1, wherein the network communication module further comprises:
an indicator circuit configured to indicate running status of the network communication module.

5. The device according to claim 1, wherein a network access approach of the network communication module comprises wireless network access and wired network access.

6. The apparatus according to claim 1, wherein the human-computer interaction display is further configured to provide an interface of an input device for the user to operate the network data services.

7. A method for implementing a projector apparatus having network functionality, comprising:
providing, by a network communication module of the projector apparatus, a user with network data services;
displaying, by a human-computer interaction display of the projector apparatus, for the user content of currently-running network data services, acquiring operation instructions of the user and transmitting the operation instructions to a projector CPU module of the projector apparatus;
controlling, by the projector CPU module, the network communication module to transmit/receive and process the network data services according to the operation instructions of the user, and acquiring network data downloaded by the user from the network communication module;
controlling, by the projector CPU module, the projector apparatus to project the network data on a screen.

8. The method according to claim 7, further comprising:
indicating, by an indicator circuit in the projector apparatus, running status of the network communication module.

9. The method according to claim 7, wherein a network access approach of the network communication module comprises wireless network access and wired network access.

10. The method according to claim 7, wherein the step of acquiring, by the human-computer interaction display, operation instructions of the user further comprises:
acquiring the operation instructions of the user through an interface of an input device provided by the human-computer interaction display.
